# EUROPEAN PATENT APPLICATION

(11) **EP 1 328 110 A1**
(43) Date of publication of application: **16.07.2003**
(21) Application number: 02360020.8
(22) Date of filing: 11.01.2002
(51) Int. Cl.: H04M 7/00, H04L 29/06, H04Q 3/00

(54) **A call handling device for different types of applications**

(71) Applicant: ALCATEL, 75008 Paris (FR)
(72) Inventor: Penet, Xavier, 67400 Illkirchen-Graffenstaden (FR); Marchesin, Armand, 67370 Griesheim/Souffel (FR)
(74) Representative: Rausch, Gabriele, Dr.

(57) **Abstract**

The invention relates to a device having a communication server structure comprising a platform (P) including a central processing unit called CPU (1), an operating system called OS (2), a first telecommunication application called arbitration appication (5) running on said CPU and with respect to said OS, a mass memory (3) and a working memory (4) both mastered by said CPU. The platform further comprises at least one application (60,61) called secondary application, which is not a telecommunication application, running on said CPU and with respect to said OS. The arbitration application also comprises means for receiving and switching information (53) to the secondary application, and inter-applications communication means (82) allowing exchange of information between at least the arbitration and secondary applications without using external links to the platform.

## Description

The invention relates to telecommunication devices. More particularly it relates to a device having a communication server structure.

As is known, a Voice Communication Server such as a Private Branch exchange (PBX) comprises one so called telecommunication platform and other platforms per Internet Protocol (IP) application, each platform comprising :
- a central processing unit called CPU,
- a operating system called OS,
- means for external communication e.g. according to Transmission Control Protocol-Internet Protocol (TCP-IP),
- a mass memory and a working memory both mastered by the CPU.

Therefore, in present communication server, only telecommunication applications such as Call Handling (CH), Computer Telephony Integration (CTI) or Voice Mail can run on one platform in accordance with its OS. When information exchange is required between a telecommunication application and an IP application such as Voice over IP (VoIP) and Internet Access (IA), external links are necessary to interconnect the different platforms dedicated to said applications. Thus, several Ethernet interfaces and also additional functions e.g. one LAN Switch port per platform are used.

Such a system is not satisfactory since this redundancy of platforms is not cost optimized, the high number of platforms provides a communication server with bad feature integration and limited performance because of the long and complex path of information. Indeed, the duplication of means for external communication is also a bottleneck for performance.

An object of the present invention is to implement a device easing the inter-applications dialog between applications of different types and optimized in terms of cost and performance.

To this end, the invention provides a device having a communication server structure comprising a platform including:
- a central processing unit called CPU,
- an operating system called OS,
- a first telecommunication application called arbitration application running on said CPU and with respect to said OS,
- a mass memory and a working memory both mastered by said CPU,
**characterized in that** said platform further comprises :
- at least one application called secondary application, which is not a telecommunication application, running on said CPU and with respect to said OS,
**in that** said arbitration application comprises means for receiving and switching information to said secondary application,
**and in that** said platform further comprises inter-applications communication means allowing exchange of information between at least said arbitration and secondary applications without using external links to said platform, such as Ethernet links.

Running all kind of applications on a same platform of the invention with a single CPU and associated OS and single working and storage memories for all applications allows a much better integration and performance.

In one preferred embodiment, the inter-applications communication means do not use controlled communication means, such as a TCP-IP protocol, in order to provide faster bi-directional transmissions.

Advantageously, the arbitration application can be Call Handling, the secondary application can be an IP application selected among one or more of the following: Voice over Internet Protocol (VoIP) and Internet Access (IA).

In one preferred embodiment, the platform of the invention further comprises :
- shared telecommunication resources selected among one or more of the following : signal voice processing means, audio codec means and an HDLC resource,
- connection means for connecting the CPU to the shared telecommunication resources.

In a telecommunication platform of the prior art, a resource is dedicated to a single telecommunication application as follows :
- signal voice processing means is dedicated to Call Handling,
- High-level Data Link Control (HDLC) resource is dedicated to Call Handling,
- audio codec means is dedicated to Voice Mail.

Different kind of applications in the single platform share a same telecommunication resource by way of example as follows :
- signal voice processing means are shared between CH and VoIP applications,
- audio codec means are shared between Voice Mail and VoIP applications,
- the HDLC resource, used for legacy Integrated Services Digital Network (ISDN) and Remote Access Server, is shared between CH and IA applications.

In this preferred embodiment of the invention, the platform of the invention can also comprise a protocol software to perform signal exchange between one of the shared telecommunication resources called emitter or receiver resource and one of the applications called receiver or emitter application, the signal comprising :
- a header including the identifying codes of the emitter or receiver resource and receiver or emitter application, specific commands or specific status combined with timestamp,
- a payload including at least the wanted signal to be stored in the working memory as a buffer for said receiver or emitter application or to be processed by said emitter or receiver resource.

Preferably, the platform can further comprise at least an IP resource, such as encryption means classically used in the IP world, and connection means for connecting the CPU to the IP resource.

Advantageously, the platform further can comprise :
- a switching unit mastered by the arbitration application,
- low level telecommunication protocol means associated to CH application and used, by way of example, for managing signalling when a call occurs,
- connection means for connecting the CPU to the switching unit and the low level telecommunication protocol means.

The switching unit of the invention can be used by telecommunication and IP applications.

Advantageously, the connection means can comprise a multimaster bus connected to the CPU and to at least one emitter equipment and one receiver equipment, the equipments being selected among phone devices and data based apparatuses.

The multimaster bus of the invention performs multi master capabilities of different elements such as the shared telecommunication resources, the switching unit and IP resource. The multimaster bus ensures concurrent and simultaneous accesses to working memory without disturbing the CPU and to each shared resource by the different applications.

The multimaster bus of the invention can be a Peripheral Component Interconnect (PCI) bus and can have a minimum bandwidth of 132 Mbytes to provide optimised performances.

Moreover, the platform can further comprise controlled communication means, one Ethernet interface with several Ethernet inputs and Ethernet outputs and one Pulse Code Modulation (PCM) interface with several PCM inputs and PCM outputs.

The Ethernet and/or PCM outputs can be connected to networks such as LAN, WAN, Internet, a Public Switched Telecommunication Network (PSTN) which can be of analog or digital type, and/or a demilitarized zone (DMZ).

The Ethernet interface is shared by several telecommunication and IP applications such as CTI, VoIP, Voice Mail, Internet Access, and optionally Call Handling.

Preferably, the arbitration application can comprise:
- a directory of at least addresses of one emitter equipment and of one receiver equipment, equipments being selected among phone devices and data based apparatuses,
- means for analysing said address of said emitter equipment,
- means for establishing a physical path between said emitter equipment and said receiver equipment.

Preferably, the OS of the invention can comprise real time communication means real time means, used by telecommunication applications like CH application.

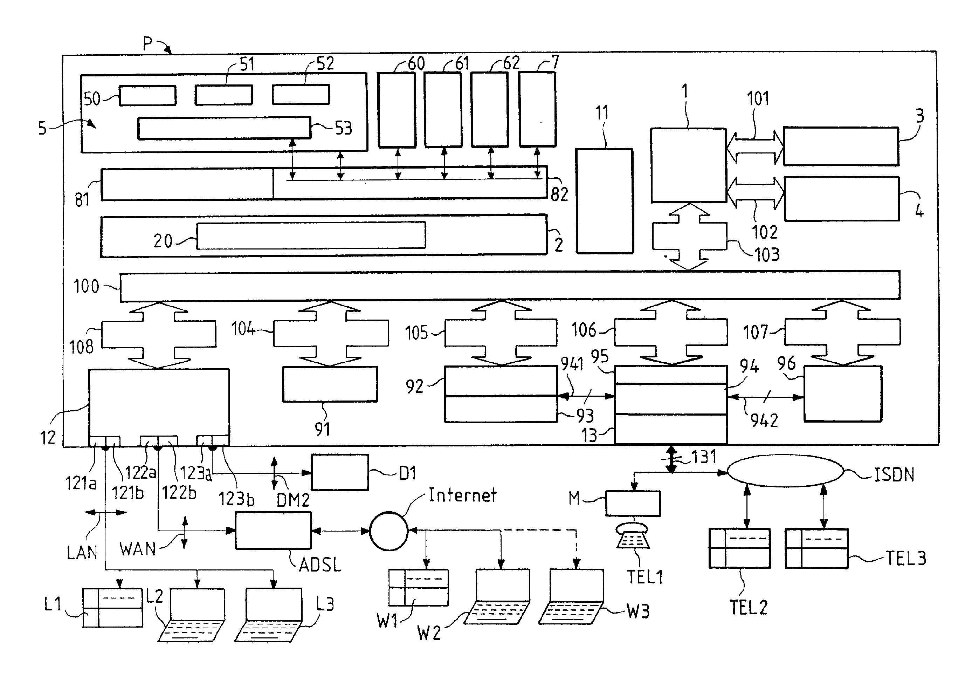

Other characteristics and advantages of the invention will appear on reading the following description of embodiments of the invention, given by way of example and with reference to the accompanying drawings, in which the Figure is a diagrammatic representation of a device having a private branch exchange structure in a preferred embodiment of the invention, and connected to networks such as LAN, WAN, Internet and ISDN and to DMZ.

The device comprises a platform P including :
- a central processing unit (CPU) 1 for example enabling signals, controlling the operating sequences, processing priority signals, sending rings, and giving the switch orders,
- an operating system (OS) 2, including real time communication means 20,
- memories mastered by the CPU 1 such as a mass memory 3 like a hard disk, for example storing e-mail, voice mail and e-mail including voice mail, and such as a working memory 4 for example storing as a buffer at least a part of information exchanged between applications or signal exchanged between a resource and an application,
- a telecommunication application which is Call Handling (CH) 5, running on the CPU 1 and with respect to the OS 2.

The Call Handling 5 is used with controlled communication means 81 (e.g. according to TCP-IP protocol) to perform a communication between phones devices. According to the invention, the Call Handling 5 includes a directory 50 containing addresses of the phones devices and also of data based apparatuses like Personal Computers (PC), means 51 for analysing the address of an emitter equipment and means 52 for establishing a physical path between the emitter equipment and the receiver equipment. Directory 50 and means 51 and 52 thus extend the possibilities of external communication.

Moreover, the Call Handling 5 is an arbitration application comprising means 53 for receiving and switching information to secondary applications included in platform P. Secondary applications not only comprise telecommunication applications such as Computer Telephony Integration (CTI) 60, Voice Mail 61 but also VoIP 70 and Internet Access 71. Secondary applications 60, 61 70, 71 run on the CPU 1 and with respect to the OS 2. Inter-applications communication means 82 allow exchange of information between Call Handling 5 and secondary applications 60, 61, 70, 71 without using either external links to the platform P and/or means 81.

More precisely, by way of example, means 53 of the arbitration application 5 receive information useful for an IP application 70. Means 53 then encapsulate this information with an appropriate header indicating the involved application 70 and switch this encapsulated information to the involved application 70. Means 82 can be based on IPC (Inter Process Communication) or on shared memories which permit to distinguish information as a function of the applications. By way of example, associated means 53 and 82 allow:
- Internet Access 71 to receive quickly and with reliability information from Voice Mail 61 in order to transmit an e-email containing voice mail to a PC of LAN network.
- Voice Mail 61 to receive quickly and with reliability information from Call Handling 5 then transmitted to a PC of WAN network,
- CTI 60 to receive quickly and with reliability information from Call Handling 5 then transmitted to a PC of LAN network.

The platform P further comprises an IP resource such as encryption means 91, serving to enhance the level of data security, available for VoIP 70 and Internet Access 71. The platform P also comprises shared telecommunication resources which are as well hardware engines e.g. algorithms embedded into an Application Specific Integrated Circuit (ASIC) as a Digital Signal Processor (DSP) running specific firmware. Shared telecommunication resources are :
- signal voice processing means 92 for example including a DSP decoding and processing the different vocal frequencies, in combination with audio codec means 93 for example including a DSP serving particularly to compress signals sent to WAN network,
- HDLC resource 96 improving the reliability of legacy signals coming from ISDN network and Remote Access Server (RAS) and also for signals sent to Internet network.

Different kind of applications in the platform P share a same telecommunication resource by way of example as follows :
- signal voice processing means are shared between CH and VoIP applications,
- audio codec means are shared between Voice Mail and VoIP applications,
- High-level Data Link Control (HDLC) resource, used for legacy Integrated Services Digital Network (ISDN) and Remote Access Server, is shared between CH and IA applications.

More over, the platform P includes a switching unit 94 mastered by the CH 5, comprising some PCM outputs 941, 942 respectively connected to signal voice processing means 92 and audio codec means 93 and to the HDLC resource 96 and also includes low level telecommunication protocol means 95.

In addition, connection means connect the CPU 1 to the mass memory 3 and the working memory 4 and to the different elements of the platform P. Thus, connection means comprise :
- a multimaster bus such as a Peripheral Component Interconnect (PCI) bus 100 connected to the CPU 1 and emitter and/or receiver equipments such as phone devices and data based apparatuses, PCI bus 100 having a minimum bandwidth of 132 Mbytes, permitting a concurrent accesses to the working memory 4 without disturbing the CPU 1 and permitting multi master capabilities of the different elements such as shared telecommunication or IP resources,
- two PCI-memory interfaces 101, 102, a PCI-CPU interface 103, four other PCI interfaces 104 to 107.

A protocol software 11 performs signal exchange between one of the shared telecommunication resources called emitter or receiver resource and one of the applications called receiver or emitter application 5, 60, 61, 70, 71. A signal from the emitter application to a receiver resource comprises :
- a header including the identifying codes of the receiver resource and emitter application, and specific commands,
- a payload including at least the wanted signal to be processed by the receiver resource.

A signal from an emitter resource to a receiver application comprises:
- a header including the identifying codes of the emitter resource and receiver application, specific status combined with a timestamp,
- a payload including at least the wanted signal to be stored in the working memory 4 as a buffer for the receiver application.

Naturally, the platform P also comprises Ethernet interface 12 with several Ethernet inputs 121a, 122a, 123a and Ethernet outputs 121b, 122b, 123b. Ethernet outputs 121b, 122b are respectively connected to LAN and WAN networks with Internet via Asymmetric Digital Subscriber Line ADSL. Such networks comprise equipments such as IP phones L1, W1, or data based apparatuses like PC L2, L3, W2, W3. Some PC W3 can virtually belong to such networks. More over, an Ethernet output 123b is also connected to DMZ connected to a Public Server D1. Ethernet interface 12 is connected to PCI 100 by a PCI-Ethernet interface 108.

The platform P also comprises PCM interface 13 with several PCM inputs and PCM outputs (see arrow 131 showing a bi-directional link). PCM outputs 131 are connected to equipments such as analog phones TEL1 via analog/digital converting means M and to PSTN such as ISDN network comprising digital phones TEL2, TEL3.

As an example of how the device according the invention is working, hereafter follows a description of the way the protocol software 11 plays his role and of the way VoIP 70 and Voice Mail 61 share the audio codec means 93, while also sharing the same CPU 1 and OS 2 and the switching unit 94.

An audio channel (not shown) coming from an IP phone is injected to the switching unit 94 via the PCM interface 13. Then the audio channel is encoded/decoded with echo cancellation by audio codec means 93 and, thanks to the protocol software 11, is sent as a packet to the working memory 4 and received by the VoIP 70. Then the packet is processed by the VoIP 70 to add the right header for example according to Real-time Transport Protocol (RTP) and/or Real-Time Control Protocol (RTCP) and then forwarded to the Ethernet interface 12. If requested it can be first forwarded to the encryption means 91.

To record a message in a voice mailbox, the audio channel follows the same path (encoding with gain control) and thanks to the protocol software 11, the packet is sent to the working memory 4 and received by the Voice Mail 61 which then stores the message in the mass memory 3.

The same structure and mechanisms apply for IP frames routed for example from the LAN to the WAN network via Ethernet interface 12. IP frames can also be forwarded first to the encryption means 91 if IPSec (Internet Protocol Security) is requested on the WAN access.

Naturally, the present invention is not limited to the example and embodiment described and shown, and the invention can be the subject of numerous alternatives that are available to the person skilled in the art.

The invention applies to all devices needing voice/IP data convergence solutions (VoIP, VoDSL, Gateways...).

## Claims

1. A device having a communication server structure comprising a platform (P) including:
- a central processing unit called CPU (1),
- an operating system called OS (2),
- a first telecommunication application called arbitration application (5) running on said CPU and with respect to said OS,
- a mass memory (3) and a working memory (4) both mastered by said CPU,
**characterized in that** said platform further comprises :
- at least one application (70, 71) called secondary application, which is not a telecommunication application, running on said CPU and with respect to said OS,
**in that** said arbitration application comprises means for receiving and switching information (53) to said secondary application,
**and in that** said platform further comprises inter-applications communication means (82) allowing exchange of information between at least said arbitration and secondary applications without using external links to said platform.

2. A device according to claim 1 **characterized in that**, said inter-applications communication means (82) do not use controlled communication means.

3. A device according to any of claims 1 or 2 **characterized in that** said arbitration application is Call Handling (5), said secondary application is an IP application selected among one or more of the following: Voice over Internet Protocol (VoIP) (70) and Internet Access (71).

4. A device according to any of claims 1 to 3 **characterized in that** said platform (P) further comprises :
- shared telecommunication resources selected among one or more of the following : signal voice processing means (92), audio codec means (93) and an HDLC resource (96),
- connection means (103, 105, 107) for connecting said CPU to said shared telecommunication resources.

5. A device according to claim 4 **characterized in that** said platform (P) comprises a protocol software (11) to perform signal exchange between one of said shared telecommunication resources called emitter or receiver resource and one of said applications called receiver or emitter application, said signal comprising :
- a header including the identifying codes of said emitter or receiver resource and receiver or emitter application, specific commands or specific status combined with timestamp,
- a payload including at least the wanted signal to be stored in the working memory as a buffer for said receiver or emitter application or to be processed by said emitter or receiver resource.

6. A device according to any of claims 1 to 5 **characterized in that** said platform (P) further comprises :
- at least an IP resource, preferably encryption means (91),
- connection means (103, 104) for connecting said CPU to said IP resource.

7. A device according to any of claims 1 to 6 **characterized in that** said platform (P) further comprises:
- a switching unit (94) mastered by said arbitration application (5),
- low level telecommunication protocol means (95),
- connection means (103, 106) for connecting said CPU to said switching unit and said low level telecommunication protocol means (95).

8. A device according to any of claims 4 to 7 **characterized in that** connection means comprise a multimaster bus (100) connected to said CPU (1) and to at least one emitter equipment and one receiver equipment, said equipments being selected among phone devices (TEL1, TEL2, TEL3, L1, W1) and data based apparatuses (L2, L3, W2, W3).

9. A device according to claim 8 **characterized in that** said multimaster bus is a Peripheral Component Interconnect bus called PCI bus (100) and said multimaster bus (100) has a minimum bandwidth of 132 Mbytes.

10. A device according to any of claims 1 to 9 **characterized in that** said platform (P) further comprises controlled communication means (81).

11. A device according to any of claims 1 to 10 **characterized in that** said platform (P) comprises one Ethernet interface (12) with several Ethernet inputs (121a, 122a, 123a) and Ethernet outputs (121b, 122b, 123b) and one PCM interface (13) with several PCM inputs and PCM outputs.

12. A device according to claim 11 **characterized in that** said Ethernet and/or PCM outputs are connected to networks such as LAN, WAN, Internet and PSTN and/or a demilitarized zone.

13. A device according to any of claims 1 to 12 **characterized in that** said arbitration application (5) comprises :
- a directory (50) of at least addresses of one emitter equipment and of one receiver equipment, said equipments being selected among phone devices (TEL1, TEL2, TEL3, L1, W1) and data based apparatuses (L2, L3, W2, W3),
- means (51) for analysing said address of said emitter equipment,
- means (52) for establishing a physical path between said emitter equipment and said receiver equipment.

14. A device according to any of claims 1 to 13 **characterized in that** said OS (2) comprises real time communication means (20).
